# EUROPEAN PATENT SPECIFICATION

(11) **EP 0 640 752 B1**
(45) Date of publication and mention of the grant of the patent: **04.02.1998**
(21) Application number: 93113760.8
(22) Date of filing: 27.08.1993
(51) Int. Cl.: F01N 3/30, F01N 3/34, F01N 3/28

(54) **Exhaust gas arrangement for an internal combustion engine**
Abgasvorrichtung für eine Brennkraftmaschine
Dispositif d'échappement pour un moteur à combustion interne

(43) Date of publication of application: 01.03.1995
(73) Proprietor: YAMAHA HATSUDOKI KABUSHIKI KAISHA, Iwata-shi Shizuoka-ken, 438 (JP)
(72) Inventor: Suzuki, Hirmomi, Iwata-shi, Shizuoka-ken 438 (JP)
(74) Representative: Grünecker, Kinkeldey, Stockmair & Schwanhäusser Anwaltssozietät

(56) References cited:
- EP-A- 0 411 561
- US-A- 3 061 416
- US-A- 3 338 682

## Description

This invention relates to an exhaust gas arrangement of an internal combustion engine according to the preamble portion of claim 1. More particularly, the present invention relates to an engine exhaust gas cleaning system and improved arrangement for introducing secondary air to an exhaust gas catalyzer.

In order to control the emission of unwanted exhaust gas constituents, a wide variety of devices have been proposed. Frequently, catalytic converters are employed for treating the exhaust gases before their discharge to the atmosphere. As is well known, a catalytic converter must be operated at the appropriate temperature in order for it to effectively treat the exhaust gases.

For this reason, it has been proposed to place the catalytic converter as close to the exhaust ports of the engine as possible. However, frequently a single catalytic converter is not sufficient to provide all of the desired exhaust gas treatment. Therefore, it has been proposed to employ plural catalytic converters in series along the exhaust system.

Where this is done, the downstream catalytic converter will receive exhaust gases that have been previously treated. A converter in effect causes afterburning of the exhaust gases and this is one way in which their unwanted exhaust gas constituents are controlled. However, the downstream catalytic converter will not receive exhaust cases that are adequate to permit afterburning.

It has, therefore, been proposed to add supplemental air to the exhaust system between the upstream and downstream converters so that the downstream converter can effectively treat the exhaust gases. One way in which this is done is to provide an atmospheric air inlet to the downstream catalytic converter which will introduce air to the converter so as to permit more effective afterburning. This has been done by providing a jacket around the catalytic converter with the upstream end of the jacket being in communication with the atmosphere and the downstream end being in communication with the converter as shown in JP-A-50 58115. This type of system has been proposed for use with motorcycles.

There are a number of disadvantages of this type of system. First, since the supplemental air is drawn from the atmosphere, there is a risk that the exhaust gases may flow back into the atmosphere through the supplemental air passage inlet. This problem can be particularly acute where the application is with a motorcycle since the air inlet is in Proximity to rider of the motorcycle. In addition, exhaust gas sounds can emanate to the atmosphere through the supplemental air inlet.

In addition to the aforenoted defects, the atmospheric air which is drawn into the system will be cold and this can detract from the efficiency of the converter. That is, the drawing of cold atmospheric air into the converter can lower its temperature and make the system inefficient.

An exhaust gas arrangement, as reflected in the preamble portion of claim 1, is known from US-A-3 061 416. Said exhaust gas arrangement comprises in the main a first chamber for separating the exhaust gas from its lead components and a second chamber for oxidising the exhaust gas by means of a catalytic medium and atmospheric oxygen.

It is an objective of the present invention to provide an improved exhaust gas arrangement for an internal combustion engine improving the efficiency of exhaust gas cleaning by means of employing supplemental air for a catalytic converter but wherein said supplemental air is drawn such that exhaust gas noises and exhaust gas are discharged to the atmosphere at a desirable location only while a quick operation of the catalytic converter is promoted.

According to the present invention, this objective is performed by an exhaust gas arrangement as specified in the preamble of claim 1, wherein the outlet end of the supplementary air conduit terminates in a venturi section formed by co-operating exhaust gas guide members at an inlet portion of the inside shell of the shell arrangement.

According to a preferred embodiment of the present invention the supplementary air conduit is provided in a heat exhanging relationship with the outer shell arrangement supporting the catalytic converter and forming an exhaust gas flow channel so as to heat the atmospheric air prior to being mixed into the flow of exhaust gas to be delivered to the catalytic converter. In this way the exhaust gas temperature will not drop significantly even if secondary air is mixed into the exhaust gas and, therefore, the temperature of the exhaust gas delivered to the catalytic converter can be kept high.

According to yet another preferred embodiment of the present invention the outer shell arrangement is defined by a first inside shell supporting the catalytic converter and an outside shell, said both shells are disposed concentrically to define an annular space therebetween which forms the supplementary air conduit having an air outlet in proximity to the inlet end of the outer shell arrangement. In this way not only the supplementary air will be heated up prior to being mixed into the flow of exhaust gas but also the outside shell of the concentric outer shell arrangement will be cooled by the supplemental air and will not be heated excessively. In this way as the outer shell forms the outside of a muffler said outer shell can be prevented from being discoloured.

According to yet another preferred embodiment of the present invention an exhaust gas silencer is provided at a rear end of the inside shell downstream of the catalytic converter such that a muffler comprises a catalytic converter and a exhaust gas silencer in series. As the supplemental air flows alongside said arrangement the exhaust gas noise leaking out of the exhaust gas silencer is radiated from the rear end of the outer shell arrangement only reducing the noise heard by the driver.

Moreover, even if a backflow of exhaust gas through the supplementary air conduit should occur such exhaust gas would be discharged from the rear end side of the catalytic converter/silencer arrangement together with the main flow of exhaust gas discharged from the tail pipe.

Other preferred embodiments are laid down in the further sub-claims.

In the following the present invention is explained in greater detail by means of an embodiment thereof in conjunction with the accompanying drawings, wherein:
Figure 1 is a side elevational view of a motorcycle having an exhaust gas arrangement, i.e. an exhaust gas cleaning system in accordance with an embodiment of this invention,
Figure 2 is an enlarged cross sectional view of a downstream catalytic converter and silencing arrangement of Figure 1,
Figure 3 is an enlarged cross sectional view taken along the line 3 - 3 of Figure 2,
Figure 4 is a typical cross sectional view taken along the lines 4 - 4 of Figure 1 or 4 - 4 of Figure 2 showing the details of the construction of upstream and downstream catalytic converters used in said embodiment.

### DETAILED DESCRIPTION OF THE PREFERRED EMBODIMENT OF THE INVENTION

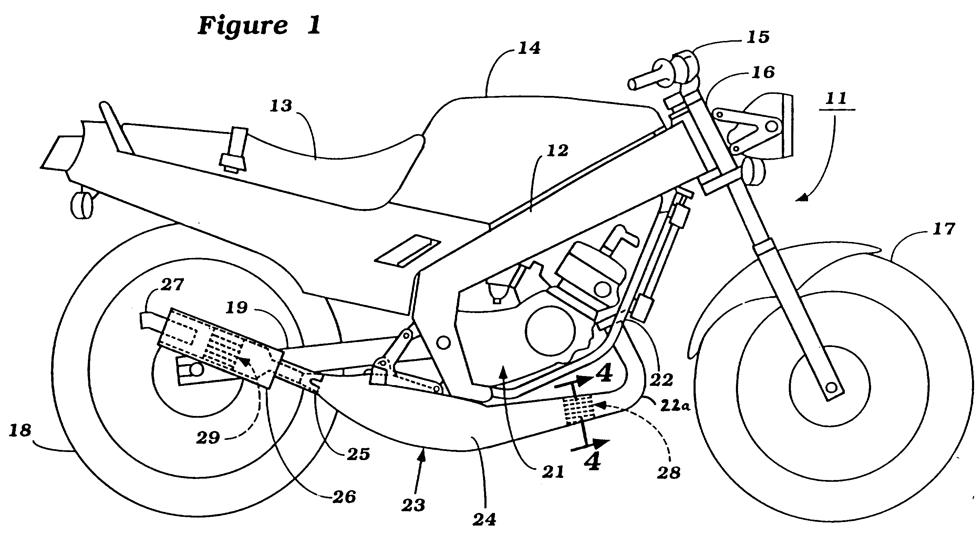

Referring now in detail to the drawings and first to Figure 1, a motorcycle having an exhaust system constructed in accordance with an embodiment of the invention is identified generally by the reference numeral 11. Although the invention is described in conjunction with a motorcycle, it can be used with other types of vehicular applications for internal combustion engines. The invention has, however, particular utility in conjunction with motorcycles because of their small size and the fact that the operator is exposed and will be readily cognizant of exhaust gases escaping in his proximity and exhaust noises in his proximity.

The motorcycle 11 is comprised of a frame assembly 12 of any known type which mounts a seat 13 rearwardly of a fuel tank 14. A handlebar assembly 15 is positioned at the front of the seat 13 and is journalled by a head pipe 16 of the frame 12 for steering of a front wheel 17 in a well known manner. The motorcycle 11 also includes a rear wheel 18 that is suspended by a trailing arm suspension 19 from the frame 12 in a known manner.

An internal combustion engine, indicated generally by the reference numeral 21 and which may in an illustrated embodiment, be comprised of a single cylinder, two cycle internal combustion engine is mounted in the frame 12 for driving the rear wheel 18. It is to be understood that the type of engine with which the invention is practiced is exemplary of only one of many types of applications. The invention does have particular utility with two cycle engines, however, due to the presence of oil in their exhaust gases which must be treated before it is discharged to the atmosphere so as to render it harmless.

As is well know, the motorcycle engine 21 includes a crankcase in which a change speed transmission is provided for driving the rear wheel 18. Since the construction of the motorcycle as thus far described may be considered to be conventional, further details of the motorcycle construction are not believed to be necessary to understand the construction and operation of the invention.

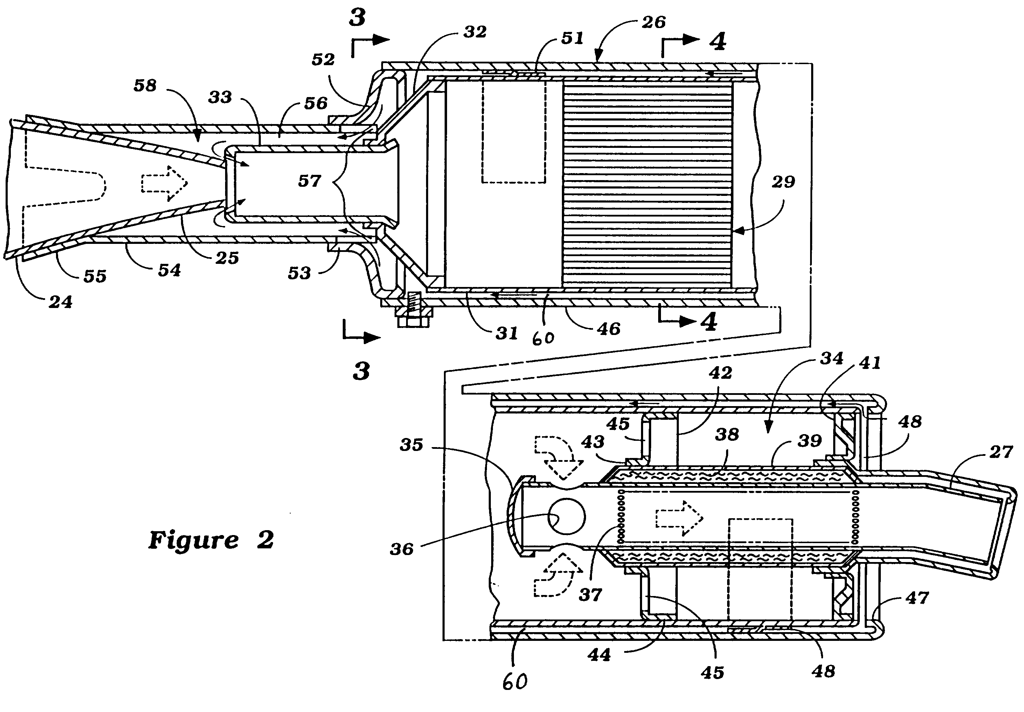

The engine 21 has a forwardly facing exhaust outlet port 22 which delivers exhaust gases to an exhaust system, indicated generally by the reference numeral 23 which is comprised of an exhaust pipe 22a and a forward expansion chamber 24 which may also include, if desired sound deadened or silencing arrangement. The expansion chamber 24 has a discharge end 25, the contstructions of which will be described later by reference to Figure 2, which delivers exhaust gases to a combined silencer catalytic converter and secondary air introducing device 26. This device 26 has a tail pipe 27 from which the exhaut gases are disharged to the atmosphere.

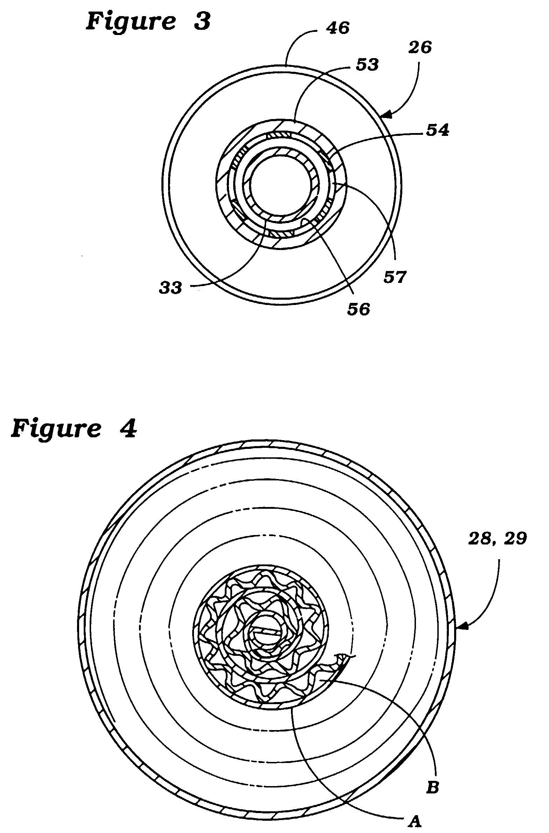

A catalytic converter 28 is provided in the expansion chamber 24 close to the exhaust outlet port 22 so as to provide effective treatment of the exhaust gases supplied through the exhaust pipe 22a. The catalytic converter 28 has a construction as will be described later by reference to Figure 4.

Referring now to Figures 2 and 3, the device 26 is comprised of a catalytic converter 29 which has a general construction like the catalyst bed 29 and which will be described later by reference to Figure 4. This catalyst bed 29 is contained and supported within an inside shell 31 that is closed at its forward end by a truncated header plate 32 which, in turn, supports an exhaust gas inlet tube 33 that is adapted to be positioned in proximity to the discharge end 25 of the expansion chamber 24, as previously noted. It will be seen that a small air gap is provided between the discharge end 25 of the expansion chamber 24 and the inlet tube 33 of the catalyst shell 31. The reason for this will be described later.

A silencing device, indicated generally by the reference numeral 34 is provided at the rear end of the inside shell 31. The silencing device 34 is comprised of an inner tube which consists of the tail pipe 27 and which extends forwardly and is capped by a closure plug 35 with a plurality of circumferentially spaced exhaust inlet openings 36 being formed therearound. The tail pipe 27 further has a perforated section 37 that is surrounded by a silencing material such as glass wool or the like 38 and which is held in place by a tubular outer shell 39 that is closed to the tail pipe 27 within the inside shell 31 between the inlet openings 36 and a rear header plate 41 which completes the outer shell 39.

A forward baffle plate 42 has a flange portion 43 that supports the outer shell 39 and an outer flange portion 44 that is affixed, as by welding, to the inner side of the inside shell 31. A plurality of openings 45 are formed in the baffle plate 42 so that the exhaust gases may communicate with an expansion chamber formed between shells 39 and 31 and between the baffle plate 42 and the header plate 41 so as to further assist in silencing.

In accordance with the invention, an air conduit 60 for receiving atmospheric air is provided by means of a further outside shell 46 which has a reversely bent rear end 47 which is spaced from the inside shell 31 so as to provide annular atmospheric air inlet 48 through which atmospheric air may be drawn as shown by the arrows in Figure 2. This atmospheric air flows forwardly in the space 60 between the shells 31 and 46 althouah its flow nath may be interrupted by a plurality of arcuate baffles 49 and 51 that extend between the shells 31 and 46 on their lower and upper sides, respectively, as seen in Figure 2 so as to provide a serpentine air flow path forwardly along not only the silencing device 34 but that outer periphery of the catalyst bed 29. As a result of this reverse flow, the atmospheric air that is drawn into the atmospheric air inlet 48 will be heated before it is introduced to the interior of the converter 26, in the manner now to be described. The inside and outside shells (31, 46) defining the supplementary air conduit 60 form a concentric shell arrangement.

A forward closure plate 52 closes the forward end of the shell 46 and, in turn, has a flange 53 that is sealingly engaged with a tube 54 which, in turn, has a forward flange 55 that is affixed, as by welding, to the converter discharge section 25. As a result, there will be formed an air channel 56 around the exhaust gas inlet tube 33. Atmospheric air may flow into this channel 56 through a plurality of inlet openings 57 that are formed in the portion of the tube 54 contained within the flange 53 of the header plate 52. This air then flows through an opening 58 into the venturi section formed by the air gap between the inlet end of the tube 33 and the discharge end 25 of the expansion chamber 24. As a result, heated atmospheric air will be delivered to the catalytic converter 29 and this will improve the operational temperature and operating efficiency of the converter 29. In addition, any exhaust gases which may leak or exhaust pulses which may be transmitted back through this supplemental air inlet passage will be discharged at the opening 48 in proximity to the tail pipe 27 and away from the rider. In addition, the noise will not be significant due to this rear discharge even if any leakage or sound does escape.

The construction of the catalytic converter sections 28 and 29 will now be described by particular reference to Figure 4. In the illustrated embodiment, the converter sections 28 and 29 are formed cylindrically in a generally honeycomb-like cross section by winding a flat band foil A and a corrugated band foil B spirally around each other. Both surfaces of either the flat band foil A or the corrugated band foil B are covered with a thin flat plate-like solder and the solder covered foil is then rolled with their fore and aft ends trued up and fixed together in a jig to form the band of honeycomb material. The rolled assembly is then heated in a furnace to cause the solder to bond the foils A and B to each other. After this, the column like member which is formed is soaked in a suspension mixed with the catalyst materials, such as platinum, palladium, copper, chromium, iron, nickel, etc. and alumina so that the catalytic substance may be carried on the column like member. Then the converter is completed by reducing and drying. Of course, the foregoing method is only one method in which the catalytic converters 28 and 29 may be formed. Various other methods can be employed in conjunction with the invention.

It should be readily apparent from the foregoing description, that with the described construction that not only the front converter 28 but the rear converter 29 can operate at maximum efficiency. The front converter 28 will be extremely efficient because it is in close proximity to the exhaust port 22 and received heated exhaust gases where further combustion may occur in proximity to the catalyst 28.

Even though the converter 29 is rearwardly positioned, the secondary air which drawn in flows around the outer periphery of the converter 29 and also the silencer 34 so that it will be heated before it flows into the venturi section formed between the opening of the inlet tube 33 of the converter shell and the discharge opening 25 of the expansion chamber 24. Thus, the gases will not only be heated but because of their rear inlet, any exhaust gas leakage which may occur will not be in proximity to the rider and the exhaust sounds which may leak also will be remotely positioned and hence, effective silencing is accomplished. It is to be understood, of course, that the foregoing description is that of a preferred embodiment of the invention and that various changes and modifications may be made without departing from the spirit and scope of the invention, as defined by the appended claims.

For example, although the afore-discussed embodiment shows the supplementary air conduit 60 to be provided between the inside and outside shells 31, 46 of the outer shell arrangement it would also be possible to weld a separate member having a generally U-shaped cross section to the outer periphery of the inside shell 31 to extend said member forming a supplementary air conduit along the inside shell 31 to define said supplementary air introducing passage as a separate member to guide the supplemental aire from the downstream side of the silencer and catalytic converter arrangement to the upstream side of the catalytic converter.

## Claims

1. Exhaust gas arrangement of an internal combustion engine having an exhaust pipe assembly and a catalytic converter (29) disposed close to a rear end of said exhaust pipe assembly (22a, 24), said catalytic converter (29) being supported by a shell arrangement comprising an inside shell (31) and an outside shell (46) defining a supplementary air conduit (60), the shell arrangement further comprising an inlet portion for receiving exhaust gases from said exhaust pipe assembly (22a, 24) and an outlet end for discharging exhaust gases to the atmosphere, whereby the supplementary air conduit (60) is provided for adding atmospheric air to the exhaust gases flowing through said catalytic converter (29), said supplementary air conduit (60) having an air inlet (48) disposed in proximity to said outlet end of said shell arrangement and an air discharge end upstream of said catalytic converter (29), **characterized in that** the outlet end of the supplementary air conduit (60) terminates in a venturi section formed by co-operating exhaust gas guide members (25, 33) at an inlet portion of the inside shell (31) of the shell arrangement (31, 46).

2. Exhaust gas arrangement as claimed in claim 1, **characterised in that** the supplementary air conduit (60) is provided in heat exchanging relationship with the shell arrangement (31, 46) so as to heat the atmospheric air before mixing same into the flow of exhaust gas delivered to the catalytic converter (29).

3. Exhaust gas arrangement as claimed in claim 1 or 2, **characterised in that** the inside shell (31) supports the catalytic converter (29), while both shells (31, 46) are disposed concentrically to define an annular space therebetween, having an air outlet in proximity to the inlet end of the shell arrangement.

4. Exhaust gas arrangement as claimed in claim 3, **characterised in that** a plurality of arcuate baffles (49, 51) are disposed between the inside and outside shell (31, 46) for causing a serpentine air flow of the atmospheric air through the supplementary air conduit (60) upstream of being introduced into the flow of exhaust gas upstream of the catalytic converter (29).

5. Exhaust gas arrangement as claimed in at least one of the preceding claims 1 to 4, **characterised in that** the inside shell (31) comprises a truncated header plate (32) at an inlet portion thereof which, in turn, supports an exhaust gas inlet tube (33) positioned in proximity to a discharge end (25) of an expansion chamber (24) of the exhaust pipe assembly (22a, 24) leaving a small annular air gap between said discharge end (25) of the expansion chamber (24) and the inlet tube (33) defining said venturi section.

6. Exhaust gas arrangement as claimed in at least one of the preceding claims 1 to 5, **characterised in that** an exhaust gas silencer (34) is provided at a rear end of the inside shell (31) downstream of the catalytic converter (29).

7. Exhaust gas arrangement as claimed in at least one of the preceding claims 1 to 6, **characterised in that** first and second catalytic converters (28, 29) are disposed in series inside the exhaust pipe assembly (22a, 24), said first catalytic converter (28) being disposed at an upstream side of the exhaust pipe assembly (22a, 24) relatively close to an exhaust outlet port (22), whereas the second catalytic converter (29) is disposed at the rear end of the exhaust gas assembly (22a, 24) downstream of an expansion chamber (24) and a tapered discharge end (25) of said expansion chamber (24), said second catalytic converter (29) being fed with a mixture of exhaust gas and fresh atmospheric air introduced from rear end of the catalytic converter (29) alongside of same receiving the heat of the flow of exhaust gas before being mixed with said flow of exhaust gas at an inlet side upstream of the catalytic converter (29).

## Patentansprüche

1. Abgasanordnung einer Brennkraftmaschine, die eine Abgasrohr-Einheit und einen dicht am hinteren Ende der Abgasrohr-Einheit (22a,24) angeordneten Katalysatorwandler (29) aufweist, welcher Katalysatorwandler (29) durch eine Gehäuseanordnung abgestützt ist, die ein Innengehäuse (31) und ein eine Zusatz-Luftleitung (60) bestimmendes Außengehäuse (46), einen Einlaßabschnitt zum Aufnehmen von Abgasen von der Abgasrohranordnung (22a,24) und ein Auslaß-Ende zum Ablassen von Abgasen an die Umgebung umfaßt, wobei die Zusatzluftleitung (60) zum Hinzufügen von Umgebungsluft zu den durch den Katalysatorwandler (29) strömenden Abgasen vorgesehen ist und einen in der Nähe zu dem Auslaß-Ende der Gehäuseanordnung angeordneten Lufteinlaß (48) und ein zu dem Katalysatorwandler (29) zustromseitiges Luftauslaß-Ende besitzt, **dadurch gekennzeichnet**, daß das Auslaß-Ende der Zusatzluftleitung (60) in einen Venturi-Abschnitt ausläuft, der durch zusammenwirkende Abgasleitteile (25,33) an einem Einlaßabschnitt des Innengehäuses (33) der Gehäuseanordnung (31,46) gebildet ist.

2. Abgasanordnung nach Anspruch 1, **dadurch gekennzeichnet**, daß die Zusatzluftleitung (60) in Wärmetauschbeziehung mit der Gehäuseanordnung (31,46) vorgesehen ist, um so die Umgebungsluft zu erhitzen, bevor sie in die dem Katalysatorwandler (29) zugelieferten Abgasstrom eingemischt wird.

3. Abgasanordnung nach Anspruch 1 oder 2, **dadurch gekennzeichnet**, daß das Innengehäuse (31) den Katalysatorwandler (29) abstützt, während beide Gehäuse (31, 46) konzentrisch angeordnet sind, um dazwischen einen Ringraum mit einem Luftauslaß in der Nähe zum Einlaß-Ende der Gehäuseanordnung zu bestimmen.

4. Abgasanordnung nach Anspruch 3, **dadurch gekennzeichnet**, daß eine Vielzahl von gebogenen Prallplatten (49,51) zwischen dem Innen- und dem Außengehäuse (31,46) angeordnet ist, um eine serpentinenartigen Luftströmung der Umgebungsluft durch die Zusatzluftleitung (60) zustromseitig zu ihrem Einführen in den zum Katalysatorwandler (29) zustromseitigen Abgasstrom zu verursachen.

5. Abgasanordnung nach mindestens einem der vorangehenden Ansprüche 1 bis 4, **dadurch gekennzeichnet**, daß das Innengehäuse (31) eine kegelstumpfförmige Stirnplatte (32) an einem Einlaßabschnitt desselben umfaßt, welche wiederum ein Abgaseinlaßrohr (33) abstützt, welches in Nähe zu einem Auslaß-Ende (25) einer Expansionskammer(24) der Abgasrohranordnung (22a,24) positioniert ist, wodurch ein kleiner den Venturi-Abschnitt bestimmender Ringluftspalt zwischen dem Auslaß-Ende (25) der Expansionskammer (24) und dem Einlaßrohr (33) belassen wird.

6. Abgasanordnung nach mindestens einem der vorangehenden Ansprüche 1 bis 5, **dadurch gekennzeichnet**, daß ein Abgasschalldämpfer (34) an einem interne Ende des Innengehäuses (31) abstromseitig zu dem Katalysatorwandler (29) vorgesehen ist.

7. Abgasanordnung nach mindestens einem der vorangehenden Ansprüche 1 bis 6, **dadurch gekennzeichnet**, daß erste und zweite Katalysatorwandler (28, 29) in Reihe innerhalb der Abgasrohranordnung (22a,24) eingesetzt sind, wobei der erste Katalysatorwandler (28) an einer Zustromseite der Abgasrohranordnung (22a,24) relativ dicht an einem Abgasauslaß-Anschluß (22) eingesetzt ist, während der zweite Katalysatorwandler (29) an dem inneren Ende der Abgasanordnung (22a, 24) abstromseitig von einer Expansionskammer (24) und einem sich verjüngenden Auslaß-Ende (25) der Expansionskammer (24) eingesetzt ist, wobei der zweite Katalysatorwandler (29) gespeist wird mit einem Gemisch aus Abgas und frischer Umgebungsluft, die, von dem inneren Ende des Katalysatorwandlers (29) eingeführt, längs desselben strömt und dabei, bevor sie mit dem Abgasstrom an einer Einlaßseite zustromseitig zum Katalysatorwandler (29) gemischt wird, die Wärme der Abgasströmung aufnimmt.

## Revendications

1. Dispositif d'échappement d'un moteur à combustion interne ayant un agencement de tuyau d'échappement et un convertisseur catalytique (29) disposé à proximité d'une extrémité arrière dudit agencement de tuyau d'échappement (22a, 24), ledit convertisseur catalytique (29) étant supporté par un agencement de carter comprenant un carter intérieur (31) et un carter extérieur (46) définissant un conduit d'air (60) supplémentaire, l'agencement de carter comprenant en outre une partie d'entrée destinée à recevoir les gaz d'échappement provenant dudit agencement de tuyau d'échappement (22a, 24), et une extrémité de sortie servant à évacuer les gaz d'échappement vers l'atmosphère de manière que le conduit d'air (60) supplémentaire soit destiné à ajouter de l'air atmosphérique aux gaz d'échappement s'écoulant dans ledit convertisseur catalytique (29), ledit conduit d'air (60) supplémentaire ayant une entrée d'air (48) disposée à proximité de ladite extrémité de sortie dudit agencement de carter et une extrémité d'évacuation d'air en amont dudit convertisseur catalytique (29), caractérisé en ce que l'extrémité de sortie du conduit d'air (60) supplémentaire se termine par une section venturi formée par des organes de guidage de gaz d'échappement (25, 33) coopérants, au niveau d'une partie d'entrée du carter intérieur (31) de l'agencement de carter (31, 46).

2. Dispositif d'échappement de gaz selon la revendication 1, caractérisé en ce que le conduit d'air (60) supplémentaire est prévu en relation d'échange de chaleur avec l'agencement de carter (31, 46), de manière à chauffer l'air atmosphérique avant d'être mélangé à l'écoulement de gaz d'échappement fourni au convertisseur catalytique (29).

3. Dispositif d'échappement de gaz selon la revendication 1 ou 2, caractérisé en ce que le carter intérieur (31) supporte le convertisseur catalytique (29), tandis que les deux carters (31, 46) sont exposés de façon concentrique afin de définir entre eux un espace annulaire, ayant une sortie d'air à proximité de l'extrémité d'entrée d'agencement de carter.

4. Dispositif d'échappement de gaz selon la revendication 3, caractérisé en ce qu'une pluralité de déflecteurs arqués (49, 51) est disposée entre les carters intérieurs et extérieurs (31, 46) afin de provoquer un écoulement d'air serpenté de l'air atmosphérique dans le conduit d'air (60) supplémentaire, en amont de l'introduction dans l'écoulement de gaz d'échappement, en amont du convertisseur catalytique (29).

5. Dispositif d'échappement de gaz selon au moins l'une des revendications 1 à 4 précédentes, caractérisé en ce que le carter intérieur (31) comprend une plaque collectrice (32) tronquée au niveau de sa partie d'entrée, qui supporte à son tour un tube d'admission de gaz d'échappement (33) disposé à proximité d'une extrémité d'évacuation (25) d'une chambre de dilatation (24) de l'agencement de tuyau d'échappement (22a, 24), laissant subsister un petit interstice d'air annulaire entre ladite extrémité d'évacuation (25) de la chambre de dilatation (24) et le tube d'entrée (33) définissant ladite section venturi.

6. Dispositif d'échappement de gaz selon au moins l'une des revendications 1 à 5 précédentes, caractérisé en ce qu'un silencieux d'échappement (34) est prévu à une extrémité arrière du carter intérieur (31), en aval du convertisseur catalytique (29).

7. Dispositif d'échappement de gaz selon au moins l'une des revendications 1 à 6 précédentes, caractérisé en ce que des premiers et deuxièmes convertisseurs catalytiques (28, 29) sont disposés en série à l'intérieur de l'agencement de tuyau d'échappement (22a, 24), ledit premier convertisseur catalytique (28) étant disposé d'un côté amont de l'agencement de tuyau d'échappement (22a, 24), de façon relativement proche d'un orifice de sortie d'échappement (22), tandis que le deuxième convertisseur catalytique (29) est disposé à l'extrémité arrière de l'agencement de gaz d'échappement (22a, 24), en aval d'une chambre de dilatation (24) et d'une extrémité d'évacuation (25) effilée de ladite chambre de dilatation (24), ledit deuxième convertisseur catalytique (29) étant alimenté par un mélange de gaz d'échappement et d'air atmosphérique frais introduit depuis l'extrémité arrière du convertisseur catalytique (29), le long de ce dernier, recevant la chaleur d'écoulement des gaz d'échappement avant d'être mélangé audit écoulement de gaz d'échappement au niveau d'un côté d'entrée en amont du convertisseur catalytique (29).
